# EUROPEAN PATENT APPLICATION

(11) **EP 1 380 618 A1**
(43) Date of publication of application: **14.01.2004**
(21) Application number: 03291712.2
(22) Date of filing: 09.07.2003
(51) Int. Cl.: C08L 23/10, C08K 3/22, C08K 9/04, H01B 3/00

(54) **Olefinic resin composition and coated electric wire**

(30) Priority: 09.07.2002 JP 2002199797
(71) Applicant: Sumimoto Wiring Systems, Ltd, Yokkaichi-City, Mie, 510-8503 (JP)
(72) Inventor: Sato, Masashi, c/o Sumitomo Wiring Systems, Ltd., Yokkaichi-ken, Mie 510-8503 (JP); Matsumoto Shinichi, c/o Sumitomo Wiring Sys., Ltd., Yokkaichi-ken, Mie 510-8503 (JP)
(74) Representative: Uchida, Kenji

(57) **Abstract**

There is provided a halogen-free olefinic resin composition for coating material for electric wires used in automobiles. The resin composition contains (A) 60 to 90 parts by mass of propylene-based polymer where melt flow rate is about 5 or less; (B)10 to 40 parts by mass of at least one polymer selected from the group consisting of: (B1) thermoplastic styrene elastomer, (B2) thermoplastic styrene elastomer denatured by acid component, (B3) a mixture of the thermoplastic styrene elastomer and the thermoplastic styrene elastomer denatured by acid component, in which the styrene elastomer and the denatured styrene elastomer respectively account for 5 to 35 parts by mass in the total amount of 10 to 40 parts by mass; (B4) rubber denatured by acid component, (B5) polyolefin denatured by acid component and (B6) a mixture of polyolefin and the polyolefin denatured by acid component, in which the polyolefin and the denatured polyolefin respectively account for 5 to 35 parts by mass in the total amount of 10 to 40 parts by mass, whereby the total amount of the propylene-based polymer (A) and the polymer (B) is 100 parts by mass; (C) 120 to 220 parts by mass of either metal hydroxide or a mixture of metal hydroxide and metal hydroxide the surface of which is treated with a coupling agent or fatty acid; and (D) 5 to 40 parts by mass of a nitrogen-containing compound.

## Description

The present invention relates to an olefinic resin composition and to coated electric wire and, more particularly, it relates to a halogen-free olefinic resin composition which satisfies the characteristics such as flame retarding property, resistance to aging, flexibility and processing ability required for a coating material for electric wire for automobiles and also to electric wire which is coated with such a halogen-free olefinic resin composition.

As a coating material for electric wire for automobiles, poly(vinyl chloride) has been mostly used. That is because poly(vinyl chloride) is excellent in terms of mechanical strength, extrusion processing ability for electric wire, flexibility, coloring property, economy, etc.

However, by taking the recent measures for global environment into consideration, there have been used halogen-free resin materials in place of poly(vinyl chloride) for the manufacture of parts for automobiles.

With regard to an abrasion-resisting resin composition having an advantage that no toxic gas such as halogen gas is generated upon burning, there have been known halogen-free resin compositions in which a polyolefin base polymer is compounded with metal hydroxide as a flame retardant (JP-A-7-176219, JP-A-7-78518, etc.).

However, when the disclosed resin composition is made flame-retardant to such an extent that it has a self-extinguishing property, large quantities of metal hydroxide are to be added. When large quantities of metal hydroxide is added however, there is resulted a problem that mechanical strength such as resistance to abrasion and tensile strength of the composition extremely lowers . In order to avoid the lowering of the mechanical strength, there is an idea of increasing the amount of relatively hard polypropylene and high-density polyethylene but, in that case, flexibility of the coated electric wire is deteriorated and processing ability becomes bad as well.

Further, in order to improve the flame retarding property of polyolefin, there have been known compositions where a nitrogen-containing compound (melamine cyanurate or melamine) is added in addition to a metal hydroxide or a phosphate condensate as a flame retardant (JP-A-2-75642, JP-A-2000-178386, JP-A-2000-294036, JP-A-9-316250, etc.). However, flame retarding property and processing ability of the polyolefin compositions containing the nitrogen compound as such are still insufficient and there has been demanded an improvement.

The present invention is to provide a halogen-free olefinic resin composition which satisfies the characteristics demanded as a coating material for electric wire for automobiles such as flame retarding property, resistance to aging, flexibility and processing ability in a well-balanced manner.

To this end, there is provided an olefinic resin composition containing:
(A) 60 to 90 parts by mass of propylene-based polymer the melt flow rate of which is about 5 or less;
(B) 10 to 40 parts by mass of at least one polymer selected from the group consisting of:
(B1) thermoplastic styrene elastomer,
(B2) thermoplastic styrene elastomer denatured by acid component,
(B3) a mixture of the thermoplastic styrene elastomer and the thermoplastic styrene elastomer denatured by acid component, in which the styrene elastomer and the denatured styrene elastomer respectively account for about 5 to about 35 parts by mass in the total amount of 10 to 40 parts by mass;
(B4) rubber denatured by acid component,
(B5) polyolefin denatured by acid component and
(B6) a mixture of polyolefin and the polyolefin denatured by acid component, in which the polyolefin and the denatured polyolefin respectively account for about 5 to about 35 parts by mass in the total amount of 10 to 40 parts by mass, whereby the total amount of the propylene-based polymer (A) and the polymer (B) is 100 parts by mass;
(C) 120 to 220 parts by mass of either metal hydroxide or a mixture of metal hydroxide and metal hydroxide the surface of which is treated with a coupling agent or fatty acid,
   wherein, when the thermoplastic styrene elastomer (B1), the thermoplastic styrene elastomer denatured by acid component (B2) or the polyolefin denatured by acid component (B5) is chosen as polymer (B), there is used a mixture of the metal hydroxide and the metal hydroxide the surface of which is treated with a coupling agent or fatty acid, in which the metal hydroxide accounts for 200 to 20 parts by mass, while the surface-treated metal hydroxide accounts for 20 to 100 parts by mass, in the total amount of 120 to 220 parts by mass; and
(D) 5 to 40 parts by mass of a nitrogen-containing compound.
Preferably, the thermoplastic styrene elastomer (B1) comprises at least one compound selected from the group consisting of a styrene-butadiene block copolymer, a styrene-ethylene-propylene block copolymer, a derivative of either of them inwhich double bond is hydrogenated, and a styrene elastomer in which double bond of a styrene-isoprene block copolymer is hydrogenated.

Preferably yet, the polyolefin comprises at least one copolymer selected from the group consisting of an ethylene-vinyl acetate copolymer, an ethylene-ethyl acrylate copolymer, an ethylene-methyl acrylate copolymer and an ethylene-butyl acrylate copolymer.

Further, the polyolefin may comprise at least one copolymer selected from the group consisting of an ethylene-vinyl acetate copolymer, an ethylene-ethyl acrylate copolymer, an ethylene-methyl acrylate copolymer and an ethylene-butyl acrylate copolymer.

Typically, the acid component used for denaturation comprises unsaturated carboxylic acid or a derivative thereof.

Further, the polyolefin (B5) denatured by acid component may be an elastomer in which the acid component is introduced into common polyolefin.

Preferably, the polyolefin (B5) denatured by acid component comprises a copolymer of olefin with (meth) acrylic acid or an ester thereof, or with vinyl acetate.

Suitably, the polyolefin comprises an ethylene-vinyl acetate copolymer, an ethylene-ethyl acrylate copolymer, an ethylene-methyl acrylate copolymer or an ethylene-butyl acrylate copolymer.

Typically, the coupling agent with which the surface of said metal hydroxide is treated comprises a silane coupling agent.

Preferably, the surface-treated metal hydroxide comprises magnesium hydroxide the surface of which is treated with an aminosilane coupling agent.

In the present invention, the nitrogen-containing compound may comprise at least one compound selected from the group consisting of melamine, guanamine, cyanuric acid, isocyanuric acid and a derivative of each thereof.

In particular, the nitrogen-containing compound may comprise melamine cyanurate.

The invention further relates to an electric wire coated with the olefinic resin composition which contains:
(A) 60 to 90 parts by mass of propylene-based polymer where melt flow rate is about 5 or less;
(B) 10 to 40 parts by mass of at least one polymer selected from the group consisting of:
(B1) thermoplastic styrene elastomer,
(B2) thermoplastic styrene elastomer denatured by acid component,
(B3) a mixture of the thermoplastic styrene elastomer and the thermoplastic styrene elastomer denatured by acid component, in which the styrene elastomer and the denatured styrene elastomer respectively account for about 5 to about 35 parts by mass in the total amount of 10 to 40 parts by mass;
(B4) rubber denatured by acid component,
(B5) polyolefin denatured by acid component and
(B6) a mixture of polyolefin and the polyolefin denatured by acid component, in which the polyolefin and the denatured polyolefin respectively account for about 5 to about 35 parts by mass in the total amount of 10 to 40 parts by mass,
   whereby the total amount of the propylene-based polymer (A) and the polymer (B) is 100 parts by mass;
(C) 120 to 220 parts by mass of either metal hydroxide or a mixture of metal hydroxide and metal hydroxide the surface of which is treated with a coupling agent or fatty acid,
   wherein, when the thermoplastic styrene elastomer (B1), the thermoplastic styrene elastomer denatured by acid component (B2) or the polyolefin denatured by acid component (B5) is chosen as polymer (B) , there is used a mixture of the metal hydroxide and the metal hydroxide the surface of which is treated with a coupling agent or fatty acid, in which the metal hydroxide accounts for 200 to 20 parts by mass, while the surface-treated metal hydroxide accounts for 20 to 100 parts by mass, in the total amount of 120 to 220 parts by mass; and
(D) 5 to 40 parts by mass of a nitrogen-containing compound. The above, and the other objects, features and advantages of the present invention will be made apparent from the following description of the preferred embodiments, given as non-limiting examples.

As hereunder, each of the components used for the composition of the present invention will be illustrated.

The propylene-based polymer (A), contained in the composition of the present invention, whose melt flow rate (MFR) is about 5 or less, comprises a propylene homopolymer or a propylene copolymer such as a random copolymer of propylene with ethylene or propylene with butene where propylene is a main component (more than 50% by mass) and a block copolymer of propylene-ethylene-propylene where MFR is about 5 or less. It is also possible to use a mixture comprising two or more thereof.

Examples of such a propylene-based polymer having MFR of about 5 or less are RB 610 A, RB 410 and RB 110 which are commercially available from K. K. Tokuyama.

When the compounding ratio of the propylene-based polymer (A) having MFR of about 5 or lower is more than the above-mentioned upper limit, flexibility of the composition is deteriorated whereby processing becomes difficult while, when the compounding ratio of the propylene-based polymer (A) having MFR of about 5 or lower is less than the above-mentioned lower limit, resistance to aging and processing ability of the composition lower.

Incidentally, the MFR is a value measured in accordance with JIS K 6921-2.

In the present invention, in addition to the propylene-based polymer (A), the following is added thereto as the second polymer (B).
(B1) thermoplastic styrene elastomer,
(B2) thermoplastic styrene elastomer which is denatured by acid component,
(B3) a mixture of thermoplastic styrene elastomer with a thermoplastic styrene elastomer denatured by acid component (where the amount of each is 5 to 35 parts by mass),
(B4) rubber which is denatured by acid component,
(B5) polyolefin which is denatured by acid component or
(B6) a mixture of polyolefin and polyolefin which is denatured by acid component (where the amount of each is 5 to 35 parts by mass)

With regard to the thermoplastic styrene elastomer (B1), preferred one is a styrene-butadiene block copolymer, a styrene-ethylene-propylene block copolymer or a polymer where double bond in such a block copolymer is hydrogenated by means of addition of hydrogen. It is also possible to use a styrene elastomer where double bond of a styrene-isoprene block copolymer is hydrogenated.

The thermoplastic styrene elastomer (B2) which is denatured by an acid component is an elastomer where an acid component such as unsaturated carboxylic acid or derivative thereof (such as acid anhydride and ester) is introduced into the thermoplastic styrene elastomer (B1) by, for example, a graft method or a direct method (copolymerization).

With regard to the unsaturated carboxylic acid, maleic acid, fumaric acid, etc. may be preferably used. With regard to the acid derivative, there may be exemplified maleic acid anhydride, maleic acid monoester and maleic acid diester. Amount of the acid component is preferably from 0.1 to 20% by weight to the un-denatured elastomer.

Thirdly, with regard to the polymer (B), there is used a mixture (B3) of thermoplastic styrene elastomer with a thermoplastic styrene elastomer denatured by acid component. This is a mixture of the components (B1) and (B2) and, in that case, the amount of each of them is 5 to 35 parts by mass and the total amount thereof is made 10 to 40 parts by mass.

The rubber (B4) which is denatured by an acid component is an elastomer where an acid component such as unsaturated carboxylic acid or derivative thereof (e.g., acid anhydride and ester) is introduced into common rubber such as ethylene-propylene rubber, ethylene-propylene-diene rubber or ethylene-butylene rubber by, for example, a graft method or a direct method (copolymerization).

The unsaturated carboxylic acid or derivative thereof used as well as amount thereof are the same as those mentioned for the component (B2).

The polyolefin (B5) which is denatured by acid component is an elastomer where an acid component such as unsaturated carboxylic acid or derivative thereof (e.g., acid anhydride and ester) is introduced into common polyolefin or, preferably, a copolymer of olefinwith (meth) acrylic acid or an ester thereof or with vinyl acetate by, for example, a graft method or a direct method (copolymerization).

The unsaturated carboxylic acid or derivative thereof used as well as amount thereof are the same as those mentioned for the component (B2).

Preferred examples of the polyolefin are an ethylene-vinyl acetate copolymer, an ethylene-ethyl acrylate copolymer, an ethylene-methyl acrylate copolymer and an ethylene-butyl acrylate copolymer.

A mixture (B6) of polyolefin and polyolefin which is denatured by an acid component is a mixture of the component (B5) with the above-mentioned non-denatured polyolefin. In that case, the amount of each is 5 to 35 parts by mass and the total amount is made 10 to 40 parts by mass.

Amount of the polymer (B) is usually 10 to 40 parts by mass or, preferably, 10 to 30 parts by mass to the total amount (100 parts by mass) of the propylene-based polymer (A) and the polymer (B).

When the amount of the polymer (B) is more than the above-mentioned upper limit, flexibility is deteriorated, processing ability becomes bad and resistance to aging lowers as well.

With regard to the metal hydroxide (C) which is a flame retardant, there may be exemplified magnesium hydroxide and aluminum hydroxide. An average particle size of the metal hydroxide is usually 0.1 to 20 µm but that is non-limitative. Further, particles of the metal hydroxide are preferably subjected to a surface treatment with coupling agent or, particularly, silane coupling agent (such as aminosilane coupling agent, vinylsilane coupling agent, epoxysilane coupling agent or methacryloxysilane coupling agent). Among them, magnesium hydroxide which is subjected to a surface treatment with an aminosilane coupling agent is particularly preferred.

Although the surface treatment by a coupling agent may be carried out before compounding the metal oxide with the resin composition, it is also possible that an un-treated metal oxide and a coupling agent are separately compounded with a resin composition to subject to an integral blending.

If desired, there may be used a metal hydroxide which is subjected to a surface treatment with higher fatty acid (such as stearic acid and oleic acid) together with metal hydroxide (including that which is subjected to a surface treatment with a coupling agent) . Particularly when a thermoplastic styrene elastomer (B1), a thermoplastic styrene elastomer denatured with an acid component (B2) or polyolefin which is denatured with an acid component (B3) is used as a polymer (B) , both metal hydroxide and metal hydroxide which is subjected to a surface treatment with fatty acid are jointly used.

An average particle size of the metal hydroxide which is subjected to a surface treatment with higher fatty acid is usually 0.1 to 20 µm as well. Although the surface treatment with higher fatty acid may be also carried out before compounding the metal oxide with the resin composition, it is also possible that an untreated metal oxide and higher fatty acid are separately compounded with a resin composition to subject to an integral blending.

Ratio of the metal hydroxide or the total ratio of the metal hydroxide and the metal hydroxide which is subjected to a surface treatment with higher fatty acid to the total amount (100 parts by mass) of the polymers (A) and (B) in the composition is usually from 120 to 220 parts by mass or, preferably, from 140 to 200 parts by mass. When the metal hydroxide and the metal hydroxide which is subjected to a surface treatment with fatty acid are jointly used, the former is used in 200 to 20 parts by mass while the latter is used in 20 to 100 parts by mass.

When the ratio of the metal hydroxide is too much, elongation of the composition is deteriorated and flexibility and processing property are deteriorated. On the other hand, when the ratio of the metal hydroxide is too small, flame retarding property of the composition is not improved.

The olefinic resin composition of the present invention contains a nitrogen-containing compound (D) for improving the flame retarding property.

Preferred examples of the nitrogen-containing compound are melamine or guanamine and a derivative thereof, cyanuric acid and isocyanuric acid or a derivative thereof or both compounds.

More preferably, melamine cyanurate is used.

Average particle size of the nitrogen-containing compound is preferably not more than 20 µm.

Surface of particles of the nitrogen-containing compound may be treated with a surface treatment agent such as colloidal silica or the above-mentioned coupling agent or higher fatty acid.

Ratio of the nitrogen-containing compound (D) to the total amount (100 parts by mass) of the polymers (A) and (B) in the composition is usually from 5 to 40 parts by mass.

When the ratio of the nitrogen-containing compound is less than the above-mentioned lower limit, flame retarding property of the composition is not well improved while, when the ratio of the nitrogen-containing compound is more than the above-mentioned upper limit, tensile characteristic of the composition lowers.

The olefinic resin composition of the present invention may be further compounded with a substance which is commonly compounded with an olefinic resin such as stabilizer (antioxidant, etc.), inactivating agent for metal (agent for preventing copper damage, etc.), lubricant (fatty acid, fatty acid amide, metal soap, hydrocarbon (such as wax) , etc. ) , light stabilizer, nucleus-forming agent, antistatic agent, coloring agent, flame retardant aid (zinc borate, flame retardant aid of a silicone type, flame retardant aid of a nitrogen type, etc.), coupling agent, softener (process oil, etc.) and cross-linking aid (multifunctional monomer, etc.) within such an extent that the above-mentioned characteristics are not lowered.

The olefinic resin composition of the present invention may be prepared by mixing and kneading the above-mentioned components by a conventional method.

A method for coating the electric wire, particularly, the electric wire for automobiles using the resin composition of the present invention is the same as the conventional method.

The olefinic resin composition of the present invention is an excellent halogen-free resin composition which satisfies the characteristics required for the coating material such as flame retarding property, tensile characteristic, resistance to aging and flexibility when it is used as a coating material for electric wire for automobiles.

### [Examples]

The present invention will now be specifically illustrated by the following Examples and Comparative Examples.

### Examples 1 to 5 and Comparative Examples 1 to 10

The components shown in Tables 1 to 3 were mixed in the ratio as shown there, kneaded at 230°C using a biaxial extruder and extruded into a shape of pellets. The resulting pellets were dried in air at 60°C under ordinary pressure and coated on a conductor size AWG 26 (7/0.16 TA) with a coat thickness of 0.195 mm at the extrusion temperature of 240 to 250°C for dice, 250 to 240°C for dice neck and 210 to 230°C for cylinder using an extrusion molder where dice and nipple were 0.90 mm and 0.55 mm, respectively.

Tensile characteristic (tensile strength and elongation upon breaking), resistance to aging, flame retarding property and processing ability were measured and evaluated by the following method for the resulting coated electric wire.

### <Tensile characteristic>

Tensile strength and elongation upon breaking were measured according to JASO (Japan Automobile Standard Organization) D 611.

When tensile strength is 10.3 MPa or more and when elongation upon breakage is 100% or more, that was judged to be "qualified".

### <Resistance to aging>

When the coated electric wire was kept at 113°C for 168 hours, it was subjected to a tensile test.

When 70% or more of tensile strength before aging and 65% or more of the elongation upon breakage before aging were maintained, that was judged to be "qualified".

### <Flame retarding property>

Flame retarding property was measured according to a VW-1 (vertical-wire flame test) according to the UL standard. A sample is contacted to flame for 15 seconds per run and five runs in total were carried out. After each contact to the flame, a burner was removed and (1) when flame goes out within 15 seconds, the sample is allowed to stand for 15 seconds while (2) when flame does not go out within 15 seconds, the sample was allowed to stand until the flame goes out. Judgment of "qualified" is issued when flame does not remain for 60 seconds or longer, the sample does not ignite and 25% or more of flag do not burn.

### <Processing ability>

This was evaluated whether "whisker" is formed upon peeling off the coat at the end of the electric wire.

The results are shown in Tables 1 to 2.

**Table 1**

| | Example 1 | Example 2 | Example 3 | Example 4 | Example 5 |
|---|---|---|---|---|---|
| PP (Block)¹⁾ | 60 | 50 | | 50 | 60 |
| PP (Random) ²⁾ | | | 60 | 40 | 20 |
| PP (Homo) ³⁾ | | 20 | | | |
| Styrene elastomer ⁴⁾ | 40 | 30 | 40 | 10 | 20 |
| Magnesium hydroxide ⁵⁾ | 140 | 120 | 120 | 100 | 200 |
| Fatty acid-treated magnesium hydroxide ⁶⁾ | 60 | 40 | 100 | 20 | 20 |
| Melamine cyanurate ⁷⁾ | 10 | 20 | 5 | 40 | 10 |
| Preventer for ageing ⁸⁾ | 1 | 1 | 1 | 1 | 1 |
| Inactivating agent for metal | | | | 0.5 | |
| Total | 311 | 281 | 326 | 261.5 | 331 |
| Tensile test | Qualified | Qualified | Qualified | Qualified | Qualified |
| Aging test | Qualified | Qualified | Qualified | Qualified | Qualified |
| Flame retarding property | Qualified | Qualified | Qualified | Qualified | Qualified |
| Processing ability | Qualified | Qualified | Qualified | Qualified | Qualified |

**Table 2**

| | Comp. Example 1 | Comp. Example2 | Comp. Example 3 | Comp. Example4 | Comp. Examples |
|---|---|---|---|---|---|
| PP (Block) ¹⁾ | 100 | | 80 | 90 | |
| PP (Random) ²⁾ | | | | | 70 |
| PP (Homo) ³⁾ | | 50 | | | |
| Styrene elastomer ⁴⁾ | | 50 | 20 | 10 | 30 |
| Magnesium hydroxide ⁵⁾ | 130 | 170 | | 160 | 170 |
| Fatty acid-treated magnesium hydroxide ⁶⁾ | 50 | 20 | 180 | | 10 |
| Melamine cyanurate ⁷⁾ | 30 | 20 | 20 | 25 | 20 |
| Preventer for ageing ⁸⁾ | 1 | 1 | 1 | 1 | 1 |
| Inactivating agent for metal | | 0.5 | | | 0.5 5 |
| Total | 311 | 311.5 | 301 | 286 | 301.5 |
| Tensile test | Qualified | Qualified | Qualified | Qualified | Qualified |
| Aging test | Qualified | Disqualified | Qualified | Disqualified | Disqualified |
| Flame retarding property | Qualified | Qualified | Qualified | Qualified | Qualified |
| Processing ability | Disqualified | Disqualified | Disqualified | Qualified | Qualified |

**Table 3**

| | Comp. Example 6 | Comp. Example 7 | Comp. Example 8 | Comp. Example 9 | Comp. Example 10 |
|---|---|---|---|---|---|
| PP (Block) ¹⁾ | 70 | 80 | | 90 | 70 |
| PP (Random) ²⁾ | | | 60 | | |
| PP (Homo) ³⁾ | | | | | |
| Styrene elastomer ⁴⁾ | 30 | 20 | 40 | 10 | 30 |
| Magnesium hydroxide ⁵⁾ | 60 | 60 | 220 | 130 | 130 |
| Fatty acid-treated magnesium hydroxide ⁶⁾ | 120 | 40 | 20 | 20 | 30 |
| Melamine cyanurate ⁷⁾ | 20 | 20 | 5 | | 50 |
| Preventer for ageing ⁸⁾ | 1 | 1 | 1 | 1 | 1 |
| Inactivating agent for metal | | | | 0.5 | 0.5 |
| Total | 301 | 221 | 346 | 251.5 | 311.5 |
| Tensile test | Qualified | Qualified | Disqualified | Qualified | Disqualified |
| Aging test | Qualified | Qualified | Qualified | Qualified | Qualified |
| Flame retarding property | Qualified | Disqualified | Qualified | Disqualified | Qualified |
| Processing ability | Disqualified | Qualified | Disqualified | Qualified | Qualified |

Notes for Tables 1 to 3:
1) Propylene-ethylene block copolymer (MFR: 0.5) (RB 610 A manufactured by K. K. Tokuyama)
2) Propylene-ethylene random copolymer (MFR: 0.5) (RB 410 manufactured by K. K. Tokuyama)
3) Polypropylene (MFR: 0.5) (RB 110 manufactured by K. K. Tokuyama)
4) Styrene elastomer where double bond of a block copolymer of styrene with butadiene is saturated by addition of hydrogen (Taftic H 1041 manufactured by Asahi Kasei)
5) MAGNIFIN H 10 (non-treated) manufactured by Martinsberg
6) Kisma 5 A (treated with fatty acid) manufactured by Kyowa K. K.
7) MC 640 manufactured by Nissan Chemical
8) Irganox 1010 manufactured by Chiba Specialities Chemicals
9) CDA-1 manufactured by Asahi Denka It is apparent from the result of Comparative Example 1 that processing ability of the resin composition is poor when no thermoplastic styrene elastomer (B1) is used. It is on the other hand apparent from the result of Comparative Example 2 that resistance to aging and processing ability of the resin composition are poor when the amount of the thermoplastic styrene elastomer (B1) is too much.
   It is apparent from the results of Comparative Examples 3 and 6 that processing ability of the resin composition is poor when only a metal oxide which is treated with fatty acid is used as a metal oxide or when the metal oxide treated with fatty acid is too much. It is on the other hand apparent from the results of Comparative Examples 4 and 5 that the resistance to aging of the resin composition is poor when no metal oxide treated with fatty acid is used or its amount is too small.
   It is apparent from the result of Comparative Example 7 that flame retarding property of the resin composition is poor when the total amount of the metal oxide and the metal oxide which is treated with fatty acid is small.
   It is apparent from the result of Comparative Example 8 that tensile characteristic and flame retarding property of the resin composition are poor when the amount of the metal oxide is too much.
   It is apparent from the results of Comparative Examples 9 and 10 that the flame retarding property of the resin composition is poor when no nitrogen-containing compound is used and that the tensile characteristic of the resin composition is poor when the amount of the nitrogen-containing compound is too much.

### Examples 6 to 10 and Comparative Examples 11 to 20

The same method as in Examples 1 to 5 was used to manufacture coated electric wire except that the components shown in Tables 4 to 6 were used in the amounts shown there and their characteristics were evaluated. The results are shown inTables 4 to 6.

**Table 4**

| | Example 6 | Example 7. | Example 8 | Example 9 | Example 10 |
|---|---|---|---|---|---|
| PP (Block)¹⁾ | | 80 | 20 | 90 | |
| PP (Random)²⁾ | | | 40 | | 70 |
| PP (Homo) ³⁾ | 60 | | | | |
| Denatured styrene elastomer ¹⁰⁾ | 40 | 20 | 40 | 10 | 30 |
| Magnesium hydroxide ⁵⁾ | 120 | 120 | 120 | 100 | 200 |
| Fatty acid-treated magnesium hydroxide ⁶⁾ | 60 | 40 | 100 | 20 | 20 |
| Melamine cyanurate ⁷⁾ | 10 | 20 | 5 | 40 | 8 |
| Preventer for ageing ⁸⁾ | 1 | 1 | 1 | 1 | 1 |
| Inactivating agent for metal | 0.5 | | 0.5 | | |
| Total | 291.5 | 281 | 326.5 | 261 | 329 |
| Tensile test | Qualified | Qualified | Qualified | Qualified | Qualified |
| Aging test | Qualified | Qualified | Qualified | Qualified | Qualified |
| Flame retarding property | Qualified | Qualified | Qualified | Qualified | Qualified |
| Processing ability | Qualified | Qualified | Qualified | Qualified | Qualified |

**Table 5**

| | Comp. Example 11 | Comp. Example 12 | Comp. Example 13 | Comp. Example 14 | Comp. Example 15 |
|---|---|---|---|---|---|
| PP (Block) ¹⁾ | 100 | 50 | 40 | 90 | 70 |
| PP (Random) ²⁾ | | | 40 | | |
| PP (Homo) ³⁾ | | | | | |
| Denatured styrene elastomer ¹⁰) | | 50 | 20 | 10 | 30 |
| Magnesium hydroxide ⁵⁾ | 130 | 160 | | 190 | 180 |
| Fatty acid-treated magnesium hydroxide ⁶⁾ | 50 | 20 | 200 | | 10 |
| Melamine cyanurate ⁷⁾ | 30 | 20 | 5 | 10 | 20 |
| Preventer for ageing ⁸⁾ | 1 | 1 | 1 | 1 | 1 |
| Inactivating agent for metal | | | 0.5 | 0.5 | |
| Total | 311 | 301 | 306.5 | 301.6 | 311 |
| Tensile test | Qualified | Qualified | Qualified | Qualified | Qualified |
| Aging test | Qualified | Disqualified | Qualified | Disqualified | Disqualified |
| Flame retarding property | Qualified | Qualified | Qualified | Qualified | Qualified |
| Processing ability | Disqualified | Disqualified | Disqualified | Qualified | Qualified |

**Table 6**

| | Comp. Example 16 | Comp. Example 17 | Comp. Example 18 | Comp. Example 19 | Comp. Example 20 |
|---|---|---|---|---|---|
| PP (Block) ¹⁾ | 30 | | 40 | 90 | 70 |
| PP (Random) ²⁾ | 40 | | 20 | | |
| PP (Homo) ³⁾ | | 70 | | | |
| Denatured styrene elastomer ¹⁰⁾ | 30 | 30 | 40 | 10 | 30 |
| Magnesium hydroxide ⁵⁾ | 60 | 80 | 220 | 130 | 120 |
| Fatty acid-treated magnesium hydroxide ⁶⁾ | 120 | 20 | 20 | 20 | 40 |
| Melamine cyanurate ⁷⁾ | 20 | 20 | 10 | | 50 |
| Preventer for ageing ⁸⁾ | 1 | 1 | 1 | 1 | 1 |
| Inactivating agent for metal | | | 0.5 | | |
| Total | 301 | 221 | 351.5 | 251 | 311 |
| Tensile test | Qualified | Qualified | Disqualified | Qualified | Disqualified |
| Aging test | Qualified | Qualified | Disqualified | Qualified | Disqualified |
| Flame retarding property | Qualified | Disqualified | Qualified | Disqualified | Qualified |
| Processing ability | Disqualified | Qualified | Disqualified | Qualified | Qualified |

Notes for Tables 4 to 6:
1)-3), 5)-9) Refer to the notes for Tables 1 to 3
10) Elastomer where double bond of a block copolymer of styrene with butadiene is saturated by addition of hydrogen and the resulting styrene elastomer is further denatured by maleic acid anhydride (TafticM1913 manufactured by Asahi Kasei)

It is apparent from the result of Comparative Example 11 that the processing ability of the resin composition is poor when no thermoplastic styrene elastomer (B2) denatured by an acid component is used. It is on the other hand apparent from the result of Comparative Example 12 that resistance to aging and processing ability of the resin composition are poor when the amount of the thermoplastic styrene elastomer (B2) denatured by an acid component is too much.

It is apparent from the results of Comparative Examples 13 and 16 that the processing ability of the resin composition is poor when only the metal oxide treated with fatty acid is used as a metal oxide or the metal oxide treated with fatty acid is too much. It is on the other hand apparent from the results of Comparative Examples 14 and 15 that resistance to aging of the resin composition is poor when no metal oxide treated with fatty aid is used or its amount is small.

It is apparent from the result of Comparative Example 17 that flame retarding property of the resin composition is poor when the total amount of the metal oxide and the metal oxide which is treated with fatty acid is small.

It is apparent from the result of Comparative Example 18 that tensile characteristic and resistance to aging of the resin composition are poor when the amount of the metal oxide is too much.

It is apparent from the results of Comparative Examples 19 and 20 that flame retarding property of the resin composition is poor when no nitrogen-containing compound is used and that tensile characteristic and resistance to aging of the resin composition are poor when the amount of the nitrogen-containing compound is too much.

### Examples 11 to 15 and Comparative Examples 21 to 29

The same method as in Examples 1 to 5 was used to manufacture coated electric wire except that the components shown in Tables 7 to 9 were used in the amounts shown there and their characteristics were evaluated. The results are shown in Tables 7 to 9.

**Table 7**

| | Example 11 | Example 12 | Example 13 | Example 14 | Example 15 |
|---|---|---|---|---|---|
| PP (Block) ¹⁾ | 30 | 70 | 30 | 60 | 90 |
| PP (Random) ²⁾ | | | 30 | | |
| PP (Homo) ³⁾ | 30 | | | | |
| Denatured styrene elastomer ¹⁰⁾ | 20 | 10 | 5 | 35 | 5 |
| Styrene elastomer ⁴⁾ | 20 | 20 | 35 | 5 | 5 |
| Magnesium hydroxide ⁵⁾ | 180 | 160 | 220 | 120 | 160 |
| Melamine cyanurate ⁷⁾ | 10 | 20 | 5 | 40 | 20 |
| Preventer for ageing ⁸⁾ | 1 | 1 | 1 | 1 | 1 |
| lnactivating agent for metal | | 0.5 | | | |
| Total | 291 | 281.5 | 326 | 261 | 329 |
| Tensile test | Qualified | Qualified | Qualified | Qualified | Qualified |
| Aging test | Qualified | Qualified | Qualified | Qualified | Qualified |
| Flame retarding property | Qualified | Qualified | Qualified | Qualified | Qualified |
| Processing ability | Qualified | Qualified | Qualified | Qualified | Qualified |

**Table 8**

| | Comp. Example 21 | Comp. Example 22 | Comp. Example 23 | Comp. Example 24 | Comp. Example 25 |
|---|---|---|---|---|---|
| PP (Block) ¹⁾ | 95 | 50 | 40 | | 60 |
| PP (Random) ²⁾ | | | 45 | | |
| PP (Homo) ³⁾ | | | | 60 | |
| Denatured styrene elastomer ¹⁰⁾ | 5 | 20 | | 40 | |
| Styrene elastomer ⁴⁾ | | 30 | 5 | | 40 |
| Magnesium hydroxide ⁵⁾ | 170 | 180 | 190 | 200 | 200 |
| Melamine cyanurate ⁷⁾ | 30 | 20 | 10 | 20 | 20 |
| Preventer for ageing ⁸⁾ | 1 | 1 | 1 | 1 | 1 |
| Inactivating agent for metal | | | | 0.5 | 0.5 |
| Total | 301 | 301 | 301 | 321.5 | 321.5 |
| Tensile test | Disqualified | Qualified | Disqualified | Qualified | Disqualified |
| Aging test | Disqualified | Qualified | Disqualified | Disqualified | Disqualified |
| Flame retarding property | Qualified | Qualified | Qualified | Qualified | Qualified |
| Processing ability | Disqualified | Disqualified | Disqualified | Qualified | Qualified |

**Table 9**

| | Comp. Example 26 | Comp. Example 27 | Comp. Example 28 | Comp. Example 29 |
|---|---|---|---|---|
| PP (Block) ¹⁾ | 70 | 60 | | 60 |
| PP (Random) ²⁾ | | | | |
| PP (Homo) ³⁾ | | | 60 | |
| Denatured styrene elastomer ¹⁰⁾ | 10 | 20 | 20 | 10 |
| Styrene elastomer ⁴⁾ | 20 | 20 | 20 | 30 |
| Magnesium hydroxide ⁵⁾ | 110 | 230 | 150 | 150 |
| Melamine cyanurate ⁷⁾ | 30 | 20 | | 50 |
| Preventer for ageing ⁸⁾ | 1 | 1 | 1 | 1 |
| Inactivating agent for metal | | | 0.5 | |
| Total | 241 | 351 | 251.5 | 301 |
| Tensile test | Qualified | Qualified | Qualified | Disqualified |
| Aging test | Qualified | Disqualified | Qualified | Disqualified |
| Flame retarding property | Disqualified | Qualified | Disqualified | Qualified |
| Processing ability | Qualified | Disqualified | Qualified | Qualified |

Notes for Tables 7 to 9:
1)-5), 7)-9) Refer to the notes for Tables 1 to 3
10): refer to the notes for Tables 4 to 6

It is apparent from the results of Comparative Examples 21 and 23 that tensile characteristic, resistance to aging and processing ability of the resin composition are poor when the amount of the propylene-based polymer (A) is too much or, in other words, the amount of the polymer (B) is too small.

It is apparent from the results of Comparative Example 24 and 25 that resistance to aging and/or tensile characteristic are/is poor when denatured styrene elastomer or styrene elastomer is used solely unless metal oxide treated with fatty acid is used together with metal oxide.

It is apparent from the results of Comparative Examples 26 and 27 that flame retarding property of the resin composition is poor when the amount of metal oxide is too small while, when amount of the metal oxide is too much, resistance to aging and processing ability of the resin composition are poor.

It is apparent from the results of Comparative Examples 28 and 29 that flame retarding property of the resin composition is poor when no nitrogen-containing compound is used while, when the amount of the nitrogen compound is too much, tensile characteristic and resistance to aging are poor when the amount of the nitrogen compound is too much.

### Examples 16 to 20 and Comparative Examples 30 to 35

The same method as in Examples 1 to 5 was used to manufacture coated electric wire except that the components shown in Tables 10 to 12 were used in the amounts shown there and their characteristics were evaluated. The results are shown in Tables 10 to 12.

**Table 10**

| | Example 16 | Example 17 | Example 18 | Example 19 | Example 20 |
|---|---|---|---|---|---|
| PP (Block) ¹⁾ | 30 | 80 | 40 | 50 | 60 |
| PP (Random) ²⁾ | | | 50 | | |
| PP (Homo) ³⁾ | 30 | | | 20 | |
| Denatured styrene elastomer ¹⁰⁾ | 40 | 20 | 10 | 30 | 40 |
| Magnesium hydroxide ⁵⁾ | 190 | 160 | 160 | 120 | 220 |
| Melamine cyanurate ⁷⁾ | 10 | 20 | 20 | 40 | 5 |
| Preventer for ageing ⁸⁾ | 1 | 1 | 1 | 1 | 1 |
| Inactivating agent for metal | | 0.5 | 0.5 | | |
| Total | 301 | 281.5 | 281.5 | 261 | 326 |
| Tensile test | Qualified | Qualified | Qualified | Qualified | Qualified |
| Aging test Flame retarding property | Qualified | Qualified | Qualified | Qualified | Qualified |
| | Qualified | Qualified | Qualified | Qualified | Qualified |
| Processing ability | Qualified | Qualified | Qualified | Qualified | Qualified |

**Table 11**

| | Comp. Example 30 | Comp. Example 31 | Comp. Example 32 | Comp. Example 33 | Comp. Example 34 |
|---|---|---|---|---|---|
| PP (Block) ¹⁾ | 95 | 50 | 40 | | 80 |
| PP (Random) ²⁾ | | | 30 | | |
| PP (Homo) ³⁾ | | | | 70 | |
| Denatured styrene elastomer ¹⁰⁾ | 5 | 50 | 30 | 30 | 20 |
| Magnesium hydroxide ⁵⁾ | 160 | 180 | 110 | 230 | 170 |
| Melamine cyanurate ⁷⁾ | 30 | 20 | 30 | 5 | |
| Preventer for ageing ⁸⁾ | 1 | 1 | 1 | 1 | 1 |
| Inactivating agent for metal | 0.5 | | | | 0.5 |
| Total | 291.5 | 301 | 241 | 336 | 271.5 |
| Tensile test | Disqualified | Qualified | Qualified | Qualified | Qualified |
| Aging test | Disqualified | Qualified | Qualified | Disqualified | Qualified |
| Flame retarding property | Qualified | Qualified | Disqualified | Qualified | Disqualified |
| Processing ability | Disqualified | Disqualified | Qualified | Qualified | Qualified |

**Table 12**

| PP (Block) ¹⁾ | Comp. Example 35 |
|---|---|
| PP (Block) ¹⁾ | 70 |
| PP (Random) ²⁾ | |
| PP (Homo) ³⁾ | |
| Denatured styrene elastomer ¹⁰⁾ | 30 |
| Magnesium hydroxide ⁵⁾ | 180 |
| Melamine cyanurate ⁷⁾ | 50 |
| Preventer for ageing ⁸⁾ | 1 |
| Inactivating agent for metal | |
| Total | 331 |
| Tensile test | Disqualified |
| Aging test | Disqualified |
| Flame retarding property | Qualified |
| Processing ability | Qualified |

Comments for Tables 10 to 12:
1)-3), 5), 7)-9) Refer to the comments for Tables 1 to 3.
11) Ethylene-propylene rubber denatured by maleic acid anhydride (T 7741 P manufactured by JSR).

It is apparent from the result of Comparative Example 30 that tensile characteristic, resistance to aging and processing ability of the resin composition are poor when the amount of the propylene-based polymer (A) is too much or, in other words, the amount of the acid-denatured rubber (B4) is too small.

It is on the other hand apparent from the result of Comparative Example 31 that processing ability of the resin composition is poor when the amount of the acid-denatured rubber (B4) is too much.

It is apparent from the results of Comparative Examples 32 and 33 that flame retarding property of the resin composition is poor when the amount of the metal oxide is too small while, when the amount of the metal oxide is too much, resistance to aging of the resin composition is poor.

It is apparent from the results of Comparative Examples 34 and 35 that flame retarding property of the resin composition is poor when no nitrogen-containing compound is used while, when the amount of the nitrogen compound is too much, tensile characteristic and resistance to aging of the resin composition are poor.

### Examples 21 to 25 and Comparative Examples 36 to 45

The same method as in Examples 1 to 5 was used to manufacture coated electric wire except that the components shown in Tables 13 to 15 were used in the amounts shown there and their characteristics were evaluated. The results are shown in Tables 13 to 15.

**Table 13**

| | Example 21 | Example 22 | Example 23 | Example 24 | Example 25 |
|---|---|---|---|---|---|
| PP (Block) ¹⁾ | 30 | 80 | 60 | 40 | |
| PP (Random) ²⁾ | | | | 50 | 65 |
| PP (Homo) ³⁾ | 30 | | | | |
| Denatured EVA ¹²⁾ | 40 | 20 | 40 | 10 | 35 |
| Magnesium hydroxide ⁵⁾ | 140 | 100 | 120 | 100 | 200 |
| Fatty acid-treated magnesium hydroxide ⁶⁾ | 60 | 60 | 100 | 20 | 20 |
| Melamine cyanurate ⁷⁾ | 10 | 20 | 5 | 40 | 5 |
| Preventer for ageing ⁸⁾ | 1 | 1 | 1 | 1 | 1 |
| lnactivating agent for metal | 0.5 | 0.5 | | | |
| Total | 331.5 | 281.5 | 326 | 261 | 326 |
| Tensile test | Qualified | Qualified | Qualified | Qualified | Qualified |
| Aging test | Qualified | Qualified | Qualified | Qualified | Qualified |
| Flame retarding property | Qualified | Qualified | Qualified | Qualified | Qualified |
| Processing ability | Qualified | Qualified | Qualified | Qualified | Qualified |

**Table 14**

| | Comp. Example 36 | Comp. Example 37 | Comp. Example 38 | Comp. Example 39 | Comp. Example 40 |
|---|---|---|---|---|---|
| PP (Block) ¹⁾ | 100 | 30 | 40 | 80 | 70 |
| PP (Random) ²⁾ | | 20 | 40 | | |
| PP (Homo) ³⁾ | | | | | |
| Denatured EVA ¹²⁾ | | 50 | 20 | 20 | 30 |
| Magnesium hydroxide ⁵⁾ | 130 | 160 | | 190 | 180 |
| Fatty acid-treated magnesium hydroxide ⁶⁾ | 50 | 20 | 200 | | 10 |
| Melamine cyanurate ⁷⁾ | 30 | 20 | 5 | 10 | 5 |
| Preventer for ageing ⁸⁾ | 1 | 1 | 1 | 1 | 1 |
| Inactivating agent for metal | | | | 0.5 | 0.5 |
| Total | 331 | 301 | 306 | 301.5 | 296.5 |
| Tensile test | Qualified | Qualified | Qualified | Disqualified | Qualified |
| Aging test | Qualified | Disqualified | Qualified | Disqualified | Disqualified |
| Flame retarding property | Qualified | Qualified | Qualified | Qualified | Qualified |
| Processing ability | Disqualified | Disqualified | Disqualified | Qualified | Qualified |

**Table 15**

| | Comp. Example 41 | Comp. Example 42 | Comp. Example 43 | Comp. Example 44 | Comp. Example 45 |
|---|---|---|---|---|---|
| PP (Block) ¹⁾ | | 70 | | 60 | 70 |
| PP (Random) ²⁾ | 80 | | 70 | | |
| PP (Homo) ³⁾ | | | | 20 | |
| Denatured EVA ¹²⁾ | 20 | 30 | 30 | 20 | 30 |
| Magnesium hydroxide ⁵⁾ | 60 | 80 | 220 | 120 | 100 |
| Fatty acid-treated magnesium hydroxide ⁶⁾ | 120 | 30 | 20 | 40 | 60 |
| Melamine cyanurate ⁷⁾ | 20 | 20 | 10 | | 50 |
| Preventer for ageing ⁸⁾ | 1 | 1 | 1 | 1 | 1 |
| Inactivating agent for metal | | | | 0.5 | 0.5 |
| Total | 301 | 231 | 351 | 261.5 | 311.5 |
| Tensile test | Qualified | Qualified | Disqualified | Qualified | Disqualified |
| Aging test | Qualified | Qualified | Disqualified | Qualified | Disqualified |
| Flame retarding property | Qualified | Disqualified | Qualified | Disqualified | Qualified |
| Processing ability | Disqualified | Qualified | Disqualified | Qualified | Disqualified |

Comments for Tables 13 to 15:
1)-3), 5)-9) Refer to the comments for Tables 1 to 3.
12) Ethylene-vinyl acetate copolymer denatured by maleic acid anhydride (VR 103 manufactured by Mitsui Dupont Chemical).

It is apparent from the result of Comparative Example 36 that processing ability of the resin composition is poor when no polyolefin (B5) denatured by acid component is used. It is on the other hand apparent from the result of Comparative Example 37 that resistance to aging and processing ability of the resin composition are poor when the amount of the polyolefin (B5) denatured by acid component is too much.

It is apparent from the results of Comparative Examples 38 and 41 that the processing ability of the resin composition is poor when only metal oxide treated with fatty acid is used as a metal oxide or when the amount of the metal oxide treated with fatty acid is too much. It is on the other hand apparent from the results of Comparative Examples 39 and 40 that the resistance to aging of the resin composition is poor when the metal oxide treated with fatty acid is not used or its amount is small.

It is apparent from the result of Comparative Example 42 that flame retarding property of the resin composition is poor when the total amount of the metal oxide and the fatty acid-treated metal oxide is small.

It is apparent from the result of Comparative Example 43 that tensile characteristic and flame retarding property of the resin composition are poor when the amount of the metal oxide is too much.

It is apparent from the results of Comparative Examples 44 and 45 that flame retarding property of the resin composition is poor when no nitrogen-containing compound is used while, when the amount of the nitrogen compound is too much, tensile characteristic, resistance to aging and processing ability of the resin composition are poor.

### Examples 26 to 30 and Comparative Examples 46 to 54

The same method as in Examples 1 to 5 was used to manufacture coated electric wire except that the components shown in Tables 16 to 18 were used in the amounts shown there and their characteristics were evaluated. The results are shown in Tables 16 to 18.

**Table 16**

| | Example 26 | Example 27 | Example 28 | Example 29 | Example 30 |
|---|---|---|---|---|---|
| PP (Block) ¹⁾ | 40 | 70 | 30 | | 90 |
| PP (Random) ²⁾ | | | 30 | 60 | |
| PP (Homo) ³⁾ | 20 | | | | |
| Denatured EVA ¹²⁾ | 20 | 10 | 5 | 35 | 5 |
| EVA ¹³⁾ | | 20 | 35 | 5 | 5 |
| EEA ¹⁴⁾ | 20 | | | | |
| Magnesium hydroxide ⁵⁾ | 170 | 160 | 220 | 120 | 160 |
| Melamine cyanurate ⁷⁾ | 10 | 20 | 5 | 40 | 20 |
| Preventer for ageing ⁸⁾ | 1 | 1 | 1 | 1 | 1 |
| Inactivating agent for metal | 0.5 | 0.5 | | | 0.5 |
| Total | 281.5 | 281.5 | 326 | 261 | 329.5 |
| Tensile test | Qualified | Qualified | Qualified | Qualified | Qualified |
| Aging test | Qualified | Qualified | Qualified | Qualified | Qualified |
| Flame retarding property | Qualified | Qualified | Qualified | Qualified | Qualified |
| Processing ability | Qualified | Qualified | Qualified | Qualified | Qualified |

**Table 17**

| | Comp. Example 46 | Comp. Example 47 | Comp. Example 48 | Comp. Example 49 | Comp. Example 50 |
|---|---|---|---|---|---|
| PP (Block) ¹⁾ | 95 | 50 | | 60 | 60 |
| PP (Random) ²⁾ | | | | | |
| PP (Homo) ³⁾ | | | 95 | | |
| Denatured EVA ¹²⁾ | 5 | 30 | | 40 | |
| EVA ¹³⁾ | | 20 | | | 40 |
| EEA ¹⁴⁾ | | | 5 | | |
| Magnesium hydroxide ⁵⁾ | 180 | 160 | 200 | 160 | 200 |
| Melamine cyanurate ⁷⁾ | 30 | 20 | 10 | 20 | 20 |
| Preventer for ageing ⁸⁾ | 1 | 1 | 1 | 1 | 1 |
| Inactivating agent for metal | | | | 0.5 | |
| Total | 311 | 281 | 311 | 281.5 | 321 |
| Tensile test | Disqualified | Qualified | Disqualified | Qualified | Disqualified |
| Aging test | Disqualified | Qualified | Disqualified | Disqualified | Disqualified |
| Flame retarding property | Qualified | Qualified | Qualified | Qualified | Qualified |
| Processing ability | Disqualified | Disqualified | Disqualified | Qualified | Qualified |

**Table 18**

| | Comp. Example 51 | Comp. Example 52 | Comp. Example 53 | Comp. Example 54 |
|---|---|---|---|---|
| PP (Block) ¹⁾ | 60 | | 70 | |
| PP (Random) ²⁾ | | 50 | | 60 |
| PP (Homo) ³⁾ | | | | |
| Denatured EVA ¹²⁾ | 30 | 30 | 10 | 40 |
| EVA ¹³⁾ | | 20 | 20 | |
| EEA ¹⁴⁾ | 10 | | | |
| Magnesium hydroxide ⁵⁾ | 110 | 230 | 160 | 160 |
| Melamine cyanurate ⁷⁾ | 30 | 5 | | 50 |
| Preventer for ageing ⁸⁾ | 1 | 1 | 1 | 1 |
| Inactivating agent for metal | | | 0.5 | |
| Total | 241 | 336 | 261.5 | 311 |
| Tensile test | Qualified | Qualified | Qualified | Disqualified |
| Aging test | Qualified | Disqualified | Qualified | Disqualified |
| Flame retarding property | Disqualified | Qualified | Disqualified | Qualified |
| Processing ability | Qualified | Disqualified | Qualified | Qualified |

Comments for Tables 16 to 18:
1)-3), 5), 7) -9) Refer to the comments for Tables 1 to 3.
12) Refer to the comment for Tables 13 to 15.
13) Ethylene-vinyl acetate copolymer (EV 360 manufactured by Mitsui Dupont Chemical).
14) Ethylene-vinyl acetate copolymer (A 714 manufactured by Mitsui Dupont Chemical).

It is apparent from the results of Comparative Examples 46 and 48 that tensile characteristic, resistance to aging and processing ability of the resin composition are poor when the amount of the propylene-based polymer (A) is too much or, in other words, the amount of the polymer (B) is too small. It is on the other hand apparent from the result of Comparative Example 47 that processing ability of the resin composition is poor when the amount of the polymer (B) is too much.

It is apparent from the result of Comparative Example 49 that resistance to aging of the resin composition is poor when the polyolefin (B5) which is denatured with acid component is solely used as a polymer (B) unless the metal oxide where the surface is treated with fatty acid is used together with the metal oxide.

It is apparent from the result of Comparative Example 50 that tensile characteristic and resistance to aging of the resin composition are poor when polyolefin which is no denatured with acid component is used as a polymer (B).

It is apparent from the results of Comparative Examples 51 and 52 that the flame retarding property of the resin composition is poor when the amount of the metal oxide is too small while, when the amount of the metal oxide is too much, resistance to aging and processing ability of the resin composition are poor.

It is apparent from the results of Comparative Examples 53 and 54 that the flame retarding property of the resin composition is poor when no nitrogen-containing compound is used while, when the amount of the nitrogen compound is too much, tensile characteristic and resistance to aging of the resin composition are poor.

## Claims

1. An olefinic resin composition containing:
(A) 60 to 90 parts by mass of propylene-based polymer the melt flow rate of which is about 5 or less;
(B) 10 to 40 parts by mass of at least one polymer selected from the group consisting of:
(B1) thermoplastic styrene elastomer,
(B2) thermoplastic styrene elastomer denatured by acid component,
(B3) a mixture of said thermoplastic styrene elastomer and said thermoplastic styrene elastomer denatured by acid component, in which said styrene elastomer and said denatured styrene elastomer respectively account for about 5 to about 35 parts by mass in the total amount of 10 to 40 parts by mass;
(B4) rubber denatured by acid component,
(B5) polyolefin denatured by acid component and
(B6) a mixture of polyolefin and said polyolefin denatured by acid component, in which said polyolefin and said denatured polyolefin respectively account for about 5 to about 35 parts by mass in the total amount of 10 to 40 parts by mass, whereby the total amount of said propylene-based polymer (A) and said polymer (B) is 100 parts by mass;
(C) 120 to 220 parts by mass of either metal hydroxide or a mixture of metal hydroxide and metal hydroxide the surface of which is treated with a coupling agent or fatty acid,
wherein, when said thermoplastic styrene elastomer (B1), said thermoplastic styrene elastomer denatured by acid component (B2) or said polyolefin denatured by acid component (B5) is chosen as polymer (B) , there is used a mixture of said metal hydroxide and said metal hydroxide the surface of which is treated with a coupling agent or fatty acid, in which said metal hydroxide accounts for 200 to 20 parts by mass, while said surface-treated metal hydroxide accounts for 20 to 100 parts by mass, in the total amount of 120 to 220 parts by mass; and
(D) 5 to 40 parts by mass of a nitrogen-containing compound.

2. The olefinic resin composition according to claim 1,
wherein said thermoplastic styrene elastomer (B1) comprises at least one compound selected from the group consisting of a styrene-butadiene block copolymer, a styrene-ethylene-propylene block copolymer, a derivative of either thereof in which double bond is hydrogenated, and a styrene elastomer in which double bond of a styrene-isoprene block copolymer is hydrogenated.

3. The olefinic resin composition according to claim 1 or 2, wherein said polyolefin comprises at least one copolymer selected from the group consisting of an ethylene-vinyl acetate copolymer, an ethylene-ethyl acrylate copolymer, an ethylene-methyl acrylate copolymer and an ethylene-butyl acrylate copolymer.

4. The olefinic resin composition according to any one of claims 1 to 3, wherein said acid component used for denaturation comprises unsaturated carboxylic acid or a derivative thereof.

5. The olefinic resin composition according to any one of claims 1 to 4, wherein said polyolefin (B5) denatured by acid component is an elastomer in which said acid component is introduced into common polyolefin.

6. The olefinic resin composition according to any one of claims 1 to 5, wherein said polyolefin (B5) denatured by acid component comprises a copolymer of olefin with (meth) acrylic acid or an ester thereof, or with vinyl acetate.

7. The olefinic resin composition according to any one of claims 1 to 6, wherein said polyolefin comprises an ethylene-vinyl acetate copolymer, an ethylene-ethyl acrylate copolymer, an ethylene-methyl acrylate copolymer or an ethylene-butyl acrylate copolymer.

8. The olefinic resin composition according to any one of claims 1 to 7, wherein said coupling agent with which the surface of said metal hydroxide is treated comprises a silane coupling agent.

9. The olefinic resin composition according to any one of claims 1 to 8, wherein said surface-treated metal hydroxide comprises magnesium hydroxide the surface of which is treated with an aminosilane coupling agent.

10. The olefinic resin composition according to any one of claims 1 to 9, wherein said nitrogen-containing compound comprises at least one compound selected from the group consisting of melamine, guanamine, cyanuric acid, isocyanuric acid and a derivative of each thereof.

11. The olefinic resin composition according to claim 10, wherein said nitrogen-containing compound comprises melamine cyanurate.

12. An electric wire coated with the olefinic resin composition according to any one of claims 1 to 11.
